# EUROPÄISCHE PATENTSCHRIFT

(11) **EP 2 691 193 B1**
(45) Veröffentlichungstag und Bekanntmachung des Hinweises auf die Patenterteilung: **22.04.2015**
(21) Anmeldenummer: 12707036.5
(22) Anmeldetag: 28.02.2012
(51) Int. Cl.: B21D 39/04, B30B 15/14, B30B 15/26, G05B 19/406

(54) **RADIALPRESSE**
RADIAL PRESS
PRESSE RADIALE

(30) Priorität: 31.03.2011 DE 102011015653
(43) Veröffentlichungstag der Anmeldung: 05.02.2014
(73) Patentinhaber: Uniflex-Hydraulik GmbH, 61184 Karben (DE)
(72) Erfinder: STICKER, Patrick, 61118 Bad Vilbel-Dortelweil (DE); POTH, Hubert, 61130 Niddatal (DE); BAUMGARTNER, Carsten, 35321 Laubach (DE)
(74) Vertreter: Grättinger Möhring von Poschinger Patentanwälte Partnerschaft
(86) Internationale Anmeldenummer: PCT/EP2012/000849
(87) Internationale Veröffentlichungsnummer: WO 2012/130363

(56) Entgegenhaltungen:
- EP-A2- 2 241 389

## Beschreibung

Die vorliegende Erfindung betrifft eine Radialpresse mit einer Grundstruktur, einem darin aufgenommenen Presswerkzeug und einer Maschinensteuerung, wobei die Grundstruktur zwei mittels einer Antriebseinheit, auf welche die Maschinensteuerung einwirkt, im Sinne einer Schließbewegung relativ zueinander bewegbare Strukturelemente aufweist, das Presswerkzeug mehrere konzentrisch um eine Pressenachse herum angeordnete Pressbacken, deren Abstand zu der Pressenachse von der Stellung der beiden Strukturelemente relativ zueinander abhängt, umfasst und der Maschinensteuerung Bedien- und Anzeigeorgane zugeordnet sind. Des Weiteren betrifft die vorliegende Erfindung ein Verfahren der Herstellung von radial verpressten Werkstücken.

Derartige Radialpressen sind in verschiedenen Bauweisen bekannt, beispielsweise als Jochpresse (vgl. z.B. DE 4135465 A1), bei welcher die beiden als Pressenjoche ausgeführten Strukturelemente in einer auf der Pressenachse senkrecht stehenden Ebene relativ zueinander bewegbar sind, oder als Hohlkolbenpresse bzw. Druckplattenpresse (vgl. z.B. DE 10149924 A1 oder DE 3611253 C2), bei welcher die beiden Strukturelemente parallel zur Pressenachse relativ zueinander bewegbar sind. Solche Radialpressen werden zur Radialverformung von Werksstücken eingesetzt, wobei ein bevorzugtes Anwendungsgebiet das Anpressen (crimpen) von Armaturen an die Enden eines Schlauchabschnitts bildet, um auf diese Weise einbaufertige Schlauchleitungen beispielsweise für Hydraulikanwendungen herzustellen.

Im Interesse einer Qualitätssicherung ist es bekannt (vgl. z.B. EP 2241389 A2), in Radialpressen der o.g. Art während des Pressens Werte (z.B. zu Abmessungen der Werkstücke und zu Prozessparametern) zu erfassen, und für eine spätere Dokumentation und Auswertung (z.B. auch für Kalibrierzwecke) abzuspeichern. Hierfür umfasst die Maschinensteuerung geeignete Mess- und Speichereinrichtungen. Eine Bereitstellung der Daten für andere Geräte ist über Netzwerke oder gesonderte externe Speichereinheiten möglich.

Bei verschiedenen Pressaufgaben, die mit solchen Radialpressen durchgeführt werden, kommt es auf ein Höchstmaß an Präzision an, um ein qualitativ hochwertiges Pressergebnis zu erzielen. Dies gilt namentlich für das Anpressen (Crimpen) von Armaturen an Schlauchabschnitte zur Herstellung von einbaufertigen Hydraulikschläuchen. Denn gerade bei mit höchsten Drücken arbeitenden Hydraulikanwendungen gewährleistet nur eine hochpräzise, geringste Toleranzen einhaltende Pressung eine sichere, dauerhaft zuverlässige, dichte und mechanisch feste Verbindung der Armaturen mit dem jeweiligen Schlauchabschnitt. Die dementsprechend hohen technischen Anforderungen an die zur Durchführung solcher Radialverpressungen bestimmten Radialpressen macht letztere zu komplexen, aufwändigen Präzisionsmaschinen mit dementsprechend hohen Herstellungskosten. Dem steht gegenüber, dass ein Bedarf an radialen Verpressungen (und hierzu geeigneten Radialpressen) nicht nur in entsprechenden Werken besteht, welche Hydraulikleitungen oder sonstige Erzeugnisse serienmäßig herstellen, sondern vielmehr auch dezentral. Dort sind indessen - auf Grund entsprechend geringer Losgrößen - hochpreisige Radialpressen regelmäßig nicht rentabel, worunter die dezentrale Versorgung der Anwender (des Marktes) mit benötigten relativ hochwertigen Radialverpressungen leidet.

Die vorliegende Erfindung hat es sich zu Aufgabe gemacht, diesem Nachteil abzuhelfen.

Gelöst wird diese Aufgabenstellung gemäß der vorliegenden Erfindung durch eine gattungsgemäße Radialpressen, die weiterhin eine Einrichtung zur Erfassung der Nutzungsintensität und zur Generierung von für die innerhalb eines definierten Zeitraumes erfolgte Nutzung der Radialpresse repräsentativen Nutzungsdaten, eine mit der Einrichtung zur Erfassung der Nutzungsintensität datenübertragend verbundene, zur Kommunikation der Nutzungsdaten nach außen geeignete Schnittstelle sowie eine mit der Schnittstelle kommunizierende Verrechnungseinheit mit einer Speichereinheit für ein Nutzungskontingent aufweist. Auf diese Weise werden die technischen Voraussetzungen für eine gegenüber dem gegenwertigen Stand verbesserte dezentrale Versorgung des Marktes mit Radialpressen, die zur Herstellung qualitativ hochwertiger Radialverpressungen geeignet sind, geschaffen. Denn Radialpressen, die im Sinne der vorliegenden Erfindung mit einer Einrichtung zur Erfassung der Nutzungsintensität und zur Generierung von für die innerhalb eines definierten Zeitraumes erfolgte Nutzung der Radialpresse repräsentativen Nutzungsdaten, einer mit der Einrichtung zur Erfassung der Nutzungsintensität datenübertragend verbundenen, zur Kommunikation der Nutzungsdaten nach außen geeigneten Schnittstelle sowie einer mit der Schnittstelle kommunizierendes Verrechnungseinheit mit einer Speichereinheit für ein Nutzungskontingent bestückt sind, lassen eine Verwendung der betreffenden Radialpresse durch wechselnde Nutzer zu, wobei unter Auswertung der ermittelten und über die Kommunikationsschnittstelle nach außen übertragenen Nutzungsdaten die Ermittlung eines die tatsächliche Nutzung der Radialpresse berücksichtigenden, von dieser abhängigen Nutzungsentgelts möglich ist. Dies hinwiederum begünstigt die Möglichkeit, eine bestimmte Radialpresse unterschiedlichen Nutzern nacheinander an verschiedenen Orten zu Verfügung zu stellen, was letztendlich die flächendeckende bzw. dichte Versorgung des Marktes mit zur Herstellung qualitativ hochwertiger Radialverpressungen geeigneten Radialpressen begünstigt. Denn durch die Erfassung (und anschließende Verwertung) von für die Intensität der Nutzung der Radialpressen durch individuelle Nutzungs- bzw. Anwendungseinheiten repräsentativen Nutzungsdaten lassen sich die Maschinenkosten angemessen auf die einzelnen Nutzungs- bzw. Anwendungseinheiten umlegen.

Gemäß einem weiteren Aspekt der vorliegenden Erfindung hat diese ein Verfahren der Herstellung von radial verpressten Werkstücken zum Gegenstand, umfassend:
- Bereitstellen einer Radialpresse mit
   einer Grundstruktur, einem darin aufgenommenen Presswerkzeug und einer Maschinensteuerung, wobei die Grundstruktur zwei mittels einer Antriebseinheit, auf welche die Maschinensteuerung einwirkt, im Sinne einer Schließbewegung relativ zueinander bewegbare Strukturelemente aufweist, das Presswerkzeug mehrere konzentrisch um eine Pressenachse herum angeordnete Pressbacken, deren Abstand zu der Pressenachse von der Stellung der beiden Strukturelemente relativ zueinander abhängt, umfasst und der Maschinensteuerung Bedien- und Anzeigeorgane zugeordnet sind, und
   einer Einrichtung zur Erfassung der Nutzungsintensität und zur Generierung von für die innerhalb eines definierten Zeitraumes erfolgte Nutzung der Radialpresse repräsentativen Nutzungsdaten,
- Radialverpressen der Werkstücke in der Radialpresse unter Erfassung der Nutzungsintensität der Radialpreese und Generierung von für die innerhalb eines definierten Zeitraumes erfolgte Nutzung der Radialpresse repräsentativen Nutzungsdaten,
- Kommunikation der Nutzungsdaten nach außen über eine mit der Einrichtung zur Erfassung der Nutzungsintensität datenübertragend verbundene Schnittstelle zu einer der Radialpresse zugeordneten, ihrerseits mit einer Speichereinheit für ein Nutzungskontingent in Verbindung stehenden Verrechnungseinheit.

Eine erste bevorzugte Weiterbildung der erfindungsgemäßen Radialpresse zeichnet sich dadurch aus, dass diese einen zur Versorgung aus einem Stromnetz geeigneten Verbindungsanschluss aufweist, wobei die Einrichtung zur Erfassung der Nutzungsintensität die innerhalb des definierten Zeitraumes bezogene elektrische Energie erfasst und aus dieser Energiemenge (bzw. unter deren Verwendung) die Nutzungsdaten generiert. Bei dieser Weiterbildung der Radialpresse nach der vorliegenden Erfindung wird somit zur Ermittlung der Nutzungsdaten eine Größe herangezogen, die (anders als die reine Betriebsdauer, d.h. die Nutzungszeit, oder der rein zahlenmäßige Umfang der Nutzung, d.h. die Anzahl der durchgeführten Pressungen) für den Grad der Nutzung der Radialpresse im Sinne von deren Abnutzung und der hierdurch verkürzten verbleibenden Lebensdauer der Radialpresse von besonderem Einfluss ist. Denn durch die Verwertung der innerhalb des definierten Zeitraumes bezogenen elektrischen Energie zur Generierung der Nutzungsdaten wird neben der Anzahl der durchgeführten Pressungen auch deren individuelle Intensität berücksichtigt, d.h. der Umstand, das mit hoher Kraft durchgeführte Verpressungen für die Radialpresse mit einer größeren mechanischen Beanspruchung verbunden sind als unter geringerer Kraft durchgeführte Verpressungen, wobei Verpressungen, welche die jeweilige Radialpresse in einem höheren Maße mechanisch belasten, sich durch einen entsprechend höheren Verschleiß bzw. eine entsprechend höhere Abnutzung in einem größeren Maße im Sinne einer Verkürzung der verbleibenden Lebensdauer der Radialpresse auswirken als verpressungen, welche die Radialpresse nur in einem geringeren Maße mechanisch belasten. Im Ergebnis gestattet somit diese Weiterbildung der vorliegenden Erfindung in besonderem Maße eine angemessene Beteiligung der einzelnen Nutzer bzw. Nutzungseinheiten an den Maschinenkosten.

Bei solchen Radialpressen, bei denen die Antriebseinheit ganz oder teilweise hydraulisch ausgeführt ist, lässt sich mit geringem Aufwand eine in entsprechender Weise besonders angemessene Beteiligung der einzelnen Nutzer bzw. Nutzungseinheiten an den Maschinenkosten realisieren, indem die Einrichtung zur Erfassung der Nutzungsintensität die Anzahl der innerhalb des definierten Zeitraumes erfolgten Pressungen und den bei den einzelnen Pressungen jeweils aufgewendeten Pressdruck, d.h. den in der Antriebseinheit bestehenden Hydraulikdruck erfasst und aus diesen Betriebsdaten die Nutzungsdaten generiert. Dies berücksichtigt, dass die Maschinenbelastung eng mit dem Pressdruck korreliert.

Die bei der erfindungsgemäßen Radialpresse zur Kommunikation der Nutzungsdaten nach außen vorgesehene Schnittstelle kann insbesondere zu einer kabelgebundenen elektrischen Datenkommunikation oder aber einer kabellosen Datenkommunikation ausgeführt sein. Die spezifische technische Ausführung richtet sich dabei insbesondere nach der Anwendungsumgebung, wobei für eine kabellose Datenkommunikation übliche Übertragungsstandards in Betracht kommen. In dem Sinne, dass mittels der Schnittstelle die Kommunikation der Nutzungsdaten nach außen, d.h. nach außerhalb der maschineninternen Sphäre der Radialpresse erfolgt, lässt sich die vorliegende Erfindung sogar durch optisch wahrnehmbare Anzeige der Nutzungsdaten auf einer durch eine Anzeigeeinheit realisierten optischen Schnittstelle umsetzen.

Gemäß einer anderen bevorzugten Weiterbildung der Erfindung ist vorgesehen, dass die zur Kommunikation der Nutzungsdaten nach außen eingerichtete Schnittstelle zur Übertragung der Nutzungsdaten an eine zentrale Datenverarbeitungseinheit ausgeführt ist, wobei die Einrichtung zur Generierung von Nutzungsdaten diese Nutzungsdaten mit für die einzelne Radialpresse charakteristischen, diese individualisierende Maschinendaten zu einem an die zentrale Datenverarbeitungseinheit übertragbaren Datensatz verknüpft. Diese Ausgestaltung der Erfindung ermöglicht die zentrale Erfassung und Weiterverarbeitung von Nutzungsdaten einer Mehrzahl von Radialpressen, die jeweils die Nutzugsdaten, und zwar mit die einzelne Radialpresse individualisierenden Maschinendaten zu einem Datensatz verknüpft, an die zentrale Datenverarbeitungseinheit übertragen. Die einzelne Radialpresse kann auf diese Weise einen Teil eines größeren Systems bilden, welches im Sinne der dichten Abdeckung des Marktes mit leistungsfähigen, hochpräzisen Radialpressen installiert werden kann. Besonders zweckmäßig ist es dabei, wenn die Einrichtung zur Erfassung der Nutzungsintensität und zur Generierung von Nutzungsdaten Datensätze, welche die für die innerhalb des jeweiligen definierten Zeitraumes erfolgte Nutzung der Radialpresse repräsentativen Nutzungsdaten enthalten, in vorbestimmten Intervallen zur Übertragung an die zentrale Datenverarbeitungseinheit mittels der Kommunikationsschnittstelle konfiguriert. Die entsprechenden Intervalle können dabei auf übliche Abrechnungsintervalle abgestimmt sein, insbesondere beispielsweise jeweils einen oder drei Monate betragen. Unter Verwertung der von den einzelnen Radialpressen an die zentrale Datenverarbeitungseinheit übermittelten Datensätzen können bei dieser Weiterbildung in regelmäßigen vorgegebenen Abständen von der das entsprechende System verwaltenden Zentrale Abrechnungen betreffend die einzelnen Nutzungseinheiten herausgegeben werden.

Gemäß einer anderen bevorzugten Weiterbildung ist vorgesehen, dass die Schnittstelle der erfindungsgemäßen Radialpresse mit einer (dezentralen) Verrechnungseinheit kommuniziert, die ihrerseits mit einer Speichereinheit für ein Nutzungskontingent in Verbindung steht. Bei dieser Ausführungsform werden die generierten Nutzungsdaten lokal in einer (bevorzugt ausschließlich der individuellen Radialpresse zugeordneten) Verrechnungseinheit dergestalt verarbeitet, dass jede einzelne durchgeführte Pressung unmittelbar auf das in der Speichereinheit abgespeicherte Nutzungskontingent angerechnet wird. Zur Eingabe (bzw. Aufstockung) des Nutzungskontingents in der Speichereinheit stehen dabei beispielsweise solche technischen Möglichkeiten zur Verfügung, wie sie im Bereich des Mobilfunks für "Prepaid" Nutzungen bekannt und im Einsatz sind. Gerade diese Weiterbildung der vorliegenden Erfindung eignet sich, nachdem eine Vernetzung der einzelnen Radialpressen zu einem eine zentrale Datenverarbeitungseinheit umfassenden Gesamtsystem nicht erforderlich ist, für eine dichte Abdeckung des Marktes mit nicht zwingend ortsgebundenen Radialpressen, auf die insbesondere mehrere Nutzer (parallel an einem Aufstellungsort oder nacheinander an unterschiedlichen Orten) Zugriff haben können. In diesem Sinne kann insbesondere vorgesehen sein, dass die Speichereinheit mehrere diskrete Speicher für individuelle Nutzungskontingente umfasst.

Eine wiederum andere bevorzugte Weiterbildung der Erfindung zeichnet sich dadurch aus, dass die Radialpresse eine Protokolleinheit umfasst, in welcher zur Erzeugung eines individuellen Nutzer- bzw. Nutzungsprofils die Nutzungsdaten und/oder sonstige Betriebsdaten (z.B. Uhrzeiten, Pressdruck, Bediener, Produkt, Anzahl) abrufbar abgespeichert sind. Dies ermöglicht es, für einen bestimmten Nutzer, dem eine solche Radialpresse für einen bestimmten Zeitraum zur Nutzung zur Verfügung gestellt wird, individuell eine optimal auf dieses Nutzungsprofil abgestimmte Radialpresse zu konfigurieren.

Schließlich kann es vorteilhaft sein, wenn die erfindungsgemäße Radialpresse über eine zum Datenaustausch mit einer Datenbank geeignete Schnittstelle verfügt, welche insbesondere zur über jene Datenbank, mit der über die Schnittstelle kommuniziert wird, erfolgenden automatischen Nachbestellung von auf der Radialpresse verarbeiteten Teilen (z.B. Schläuche, Armaturen, Fittings) genutzt werden kann.

## Patentansprüche

1. Radialpresse mit einer Grundstruktur, einem darin aufgenommenen Presswerkzeug und einer Maschinensteuerung, wobei die Grundstruktur zwei mittels einer Antriebseinheit, auf welche die Maschinensteuerung einwirkt, im Sinne einer Schließbewegung relativ zueinander bewegbare Strukturelemente aufweist, das Presswerkzeug mehrere konzentrisch um eine Pressenachse herum angeordnete Pressbacken, deren Abstand zu der Pressenachse von der Stellung der beiden Strukturelemente relativ zueinander abhängt, umfasst und der Maschinensteuerung Bedien- und Anzeigeorgane zugeordnet sind, wobei die Radialpresse weiterhin eine Einrichtung zur Erfassung der Nutzungsintensität und zur Generierung von für die innerhalb eines definierten Zeitraumes erfolgte Nutzung der Radialpressen repräsentativen Nutzungsdaten, eine mit der Einrichtung zur Erfassung der Nutzungsintensität datenübertragend verbundene, zur Kommunikation der Nutzungsdaten nach außen geeignete Schnittstelle sowie eine mit der Schnittstelle kommunizierende Verrechnungseinheit mit einer Speichereinheit für ein Nutzungskontingent aufweist.

2. Radialpresse nach Anspruch 1, **dadurch gekennzeichnet, dass** sie einen zur Versorgung aus einem Stromnetz geeigneten Verbindungsanschluss aufweist, wobei die Einrichtung zur Erfassung der Nutzungsintensität die innerhalb des definierten Zeitraumes bezogene elektrische Energie erfasst und aus dieser die Nutzungsdaten generiert.

3. Radialpresse nach Anspruch 1, **dadurch gekennzeichnet, dass** die Antriebseinheit der Radialpresse ganz oder teilweise hydraulisch ausgeführt ist, wobei die Einrichtung zur Erfassung der Nutzungsintensität die Anzahl der innerhalb des definierten Zeitraumes erfolgten Pressungen und den bei den einzelnen Pressungen jeweils aufgewendeten Pressdruck erfasst und aus diesen Betriebsdaten die Nutzungsdaten generiert

4. Radialpresse nach einem der Ansprüche 1 bis 3, **dadurch gekennzeichnet, dass** die Schnittstelle zu einer kabelgebundenen elektrischen Datenkommunikation ausgeführt ist.

5. Radialpresse nach einem der Ansprüche 1 bis 3, **dadurch gekennzeichnet, dass** die Schnittstelle zu einer kabellosen Datenkommunikation ausgeführt ist.

6. Radialpresse nach einem der Ansprüche 1 bis 5, **dadurch gekennzeichnet, dass** die Schnittstelle zur Übertragung der Nutzungsdaten an eine zentrale Datenverarbeitungseinheit ausgeführt ist, wobei die Einrichtung zur Generierung von Nutzungsdaten diese Nutzungsdaten mit für die einzelne Radialpresse charakteristischen, diese individualisierende Maschinendaten zu einem an die zentrale Datenverarbeitungseinheit übertragbaren Datensatz verknüpft.

7. Radialpresse nach Anspruch 6, **dadurch gekennzeichnet, dass** die Einrichtung zur Erfassung der Nutzungsintensität und zur Generierung von Nutzungsdaten Datensätze, welche die für die innerhalb des jeweiligen definierten Zeitraumes erfolgte Nutzung der Radialpresse repräsentativen Nutzungsdaten enthalten, in vorbestimmten Intervallen zur Übertragung an die zentrale Datenverarbeitungseinheit mittels der Kommunikationsschnittstelle konfiguriert.

8. Radialpresse nach einem der Ansprüche 1 bis 7, **dadurch gekennzeichnet, dass** die Speichereinheit mehrere Speicher mit individuellen Nutzungskontingenten umfasst.

9. Radialpresse nach einem der Ansprüche 1 bis 8, **dadurch gekennzeichnet, dass** sie eine Protokolleinheit umfasst, in welcher zur Erzeugung eines individuellen Nutzer- bzw. Nutzungsprofils die Nutzungsdaten und/oder sonstige Betriebsdaten abrufbar abgespeichert sind.

10. Radialpresse nach einem der Ansprüche 1 bis 9, **dadurch gekennzeichnet, dass** die Radialpresse über eine zum Datenaustausch mit einer Datenbank geeignete Schnittstelle verfügt.

11. Verfahren der Herstellung von radial verpressten Werkstücken, umfassend:
- Bereitstellen einer Radialpresse mit einer Grundstruktur, einem darin aufgenommenen Presswerkzeug und einer Maschinensteuerung, wobei die Grundstruktur zwei mittels einer Antriebseinheit, auf welche die Maschinensteuerung einwirkt, im Sinne einer Schließbewegung relativ zueinander bewegbare Strukturelemente aufweist, das Presswerkzeug mehrere konzentrisch um eine Pressenachse herum angeordnete Pressbacken, deren Abstand zu der Pressenachse von der Stellung der beiden Strukturelemente relativ zueinander abhängt, umfasst und der Maschinensteuerung Bedien- und Anzeigeorgane zugeordnet sind, und
einer Einrichtung zur Erfassung der Nutzungsintensität und zur Generierung von für die innerhalb eines definierten Zeitraumes erfolgte Nutzung der Radialpresse repräsentativen Nutzungsdaten,
- Radialverpressen der Werkstücke in der Radialpresse unter Erfassung der Nutzungsintensität der Radialpresse und Generierung von für die innerhalb eines definierten Zeitraumes erfolgte Nutzung der Radialpresse repräsentativen Nutzungsdaten,
- Kommunikation der Nutzungsdaten nach außen über eine mit der Einrichtung zur Erfassung der Nutzungsintensität datenübertragend verbundene Schnittstelle zu einer der Radialpresse zugeordneten, ihrerseits mit einer Speichereinheit für ein Nutzungskontingent in Verbindung stehenden Verrechnungseinheit.

## Claims

1. A radial press with a base structure, a pressing tool accommodated therein and a machine control, with the base structure featuring two structural elements that can be moved relative to one another to the effect of a closing motion by means of a drive unit acted upon by the machine control, with the pressing tool comprising several pressing jaws that are arranged concentrically around a press axis and the distance of which from the press axis depends on the position of the two structural elements relative to one another, and with control and display elements being assigned to the machine control, wherein the radial press furthermore features a device for determining the intensity of use and for generating usage data that is representative of the use of the radial press within a defined time period, an interface that is connected to the device for determining the intensity of use in a data-transmitting fashion and suitable for the external communication of the usage data, as well as an accounting unit that communicates with the interface and features a storage unit for a usage quota.

2. The radial press according to claim 1, **characterized in that** it features a suitable connection for a mains power supply, wherein the device for determining the intensity of use measures the electric energy consumed within the defined time period and generates the usage data from this amount of energy.

3. The radial press according to claim 1, **characterized in that** the drive unit is entirely or partially realized hydraulically, wherein the device for determining the intensity of use determines the number of pressing operations carried out within the defined time period, as well as the respective pressing pressure exerted during the individual pressing operations, and generates the usage data from this operational data.

4. The radial press according to one of claims 1 to 3, **characterized in that** the interface is designed for wire-bound electric data communication.

5. The radial press according to one of claims 1 to 3, **characterized in that** the interface is designed for wireless data communication.

6. The radial press according to one of claims 1 to 5, **characterized in that** the interface is designed for transmitting the usage data to a central data processing unit, wherein the device for generating usage data links this usage data with machine data that is characteristic for the individual radial press in order to generate a data set that can be transmitted to the central data processing unit.

7. The radial press according to claim 6, **characterized in that** the device for determining the intensity of use and for generating usage data configures data sets, which contain usage data representative of the use of the radial press within the respectively defined time period, in predefined intervals for their transmission to the central data processing unit via the communication interface.

8. The radial press according to one of claims 1 to 7, **characterized in that** the storage unit comprises several storage cells with individual usage quotas

9. The radial press according to one of claims 1 to 8, **characterized in that** it comprises a protocol unit, in which the usage data and/or other operational data is stored in a retrievable fashion in order to prepare an individual user or usage profile.

10. The radial press according to one of claims 1 to 9, **characterized in that** the radial press features an interface suitable for exchanging data with a database.

11. A method for manufacturing radially pressed workpieces, with said method comprising the steps of:
- making available a radial press with a base structure, a pressing tool accommodated therein and a machine control, wherein the base structure features two structural elements that can be moved relative to one another to the effect of a closing motion by means of a drive unit acted upon by the machine control, wherein the pressing tool comprises several pressing jaws that are arranged concentrically around a press axis and the distance of which from the press axis depends on the position of the two structural elements relative to one another, and wherein control and display elements are assigned to the machine control, and
a device for determining the intensity of use and for generating usage data that is representative of the use of the radial press within a defined time period,
- radially pressing the workpieces in the radial press while measuring the intensity of use of the radial press and generating usage data that is representative of the use of the radial press within a defined time period, and
- externally communicating the usage data to an accounting unit, which is assigned to the radial press and in turn connected to a storage unit for a usage quota, via an interface that is connected to the device for determining the intensity of use in a data-transmitting fashion.

## Revendications

1. Presse radiale comprenant une structure de base, un outil de presse reçu dedans, et une commande de machine, sachant que la structure de base présente deux éléments structurels mobiles entre eux au sens d'un mouvement de fermeture, au moyen d'une unité d'entraînement sur laquelle la commande de machine agit, l'outil de presse comprend plusieurs mâchoires de presse disposées autour d'un axe de la presse, dont la distance jusqu'à l'axe de la presse dépend de la position des deux éléments structurels entre eux, et des organes de commande et d'affichage sont attribués à la commande de machine, sachant que la presse radiale présente en outre un dispositif de détection de l'intensité d'utilisation et de génération de données d'utilisation représentatives de l'utilisation de la presse radiale qui a eu lieu dans une période définie, une interface reliée en transmission de données au dispositif de détection de l'intensité d'utilisation, adaptée pour communiquer les données d'utilisation vers l'extérieur, ainsi qu'une unité de calcul communiquant avec l'interface, comprenant une unité de mémoire pour un contingent d'utilisation.

2. Presse radiale selon la revendication 1, **caractérisée en ce qu'**elle présente une borne de raccordement adaptée pour l'alimentation depuis un réseau de courant électrique, sachant que le dispositif de détection de l'intensité d'utilisation détecte l'énergie électrique rapportée dans la période définie et génère les données d'utilisation à partir de celle-ci.

3. Presse radiale selon la revendication 1, **caractérisée en ce que** l'unité d'entraînement de la presse radiale est conçue entièrement ou partiellement hydraulique, sachant que le dispositif de détection de l'intensité d'utilisation détecte le nombre des pressages effectués dans la période définie et la pression de pressage employée respectivement lors des différents pressages et génère les données d'utilisation à partir de ces données d'exploitation.

4. Presse radiale selon l'une des revendications 1 à 3, **caractérisée en ce que** l'interface est conçue pour une communication de données électrique filaire.

5. Presse radiale selon l'une des revendications 1 à 3, **caractérisée en ce que** l'interface est conçue pour une communication de données sans fil.

6. Presse radiale selon l'une des revendications 1 à 5, **caractérisée en ce que** l'interface est conçue pour transmettre les données d'utilisation à une unité centrale de traitement des données, sachant que le dispositif de génération de données d'utilisation combine ces données d'utilisation à des données de machines caractéristiques de la presse radiale individuelle, individualisant celle-ci, en un jeu de données pouvant être transmis à l'unité centrale de traitement des données.

7. Presse radiale selon la revendication 6, **caractérisée en ce que** le dispositif de détection de l'intensité d'utilisation et de génération de données d'utilisation configure des jeux de données qui contiennent des données d'utilisation représentatives de l'utilisation de la presse radiale qui a eu lieu dans la période définie, à intervalles prédéfinis pour la transmission à l'unité centrale de traitement des données au moyen de l'interface de communication.

8. Presse radiale selon l'une des revendications 1 à 7, **caractérisée en ce que** l'unité de mémoire comprend plusieurs mémoires avec des contingents d'utilisation individuels.

9. Presse radiale selon l'une des revendications 1 à 8, **caractérisée en ce qu'**elle comprend une unité de protocole dans laquelle les données d'utilisation et/ou d'autres données d'exploitation sont stockées en pouvant être interrogées, pour créer un profil d'utilisateur, respectivement d'utilisation, individuel.

10. Presse radiale selon l'une des revendications 1 à 9, **caractérisée en ce que** la presse radiale dispose d'une interface adaptée pour l'échange de données avec une base de données.

11. Procédé de fabrication de pièces compressées radialement, comprenant
- la préparation d'une presse radiale comprenant une structure de base, un outil de presse reçu dedans, et une commande de machine, sachant que la structure de base présente deux éléments structurels mobiles entre eux au sens d'un mouvement de fermeture, au moyen d'une unité d'entraînement sur laquelle la commande de machine agit, l'outil de presse comprend plusieurs mâchoires de presse disposées autour d'un axe de la presse, dont la distance jusqu'à l'axe de la presse dépend de la position des deux éléments structurels entre eux, et des organes de commande et d'affichage sont attribués à la commande de machine, et
un dispositif de détection de l'intensité d'utilisation et de génération de données d'utilisation représentatives de l'utilisation de la presse radiale qui a eu lieu dans une période définie,
- compression radiale des pièces dans la presse radiale par détection de l'intensité d'utilisation de la presse radiale et génération de données d'utilisation représentatives de l'utilisation de la presse radiale qui a eu lieu dans une période définie,
- communication des données d'utilisation vers l'extérieur par une interface reliée en transmission de données au dispositif de détection de l'intensité d'utilisation, vers une unité de calcul correspondante, reliée de son côté à une unité de mémoire pour un contingent d'utilisation.
